# EUROPÄISCHE PATENTSCHRIFT

(11) **EP 4 305 322 B1**
(45) Veröffentlichungstag und Bekanntmachung des Hinweises auf die Patenterteilung: **16.04.2025**
(21) Anmeldenummer: 22710159.9
(22) Anmeldetag: 03.03.2022
(51) Int. Cl.: F16D 7/02

(54) **MÖBELANTRIEB MIT EINEM ELEKTRISCHEN ANTRIEBSMOTOR MIT EINER BREMSVORRICHTUNG**
FURNITURE DRIVE DEVICE WITH ELECTROMOTOR WITH BRAKE
DISPOSITIF MOTEUR POUR MEUBLES AVEC UN ELECTROMOTEUR AVEC FREIN

(30) Priorität: 11.03.2021 DE 202021101238 U
(43) Veröffentlichungstag der Anmeldung: 17.01.2024
(73) Patentinhaber: DewertOkin Technology Group Co., Ltd., Jiaxing City, Zhejiang Province 314011 (CN)
(72) Erfinder: MÜLLER, Christian, 32369 Rahden (DE)
(74) Vertreter: Kleine, Hubertus
(86) Internationale Anmeldenummer: PCT/IB2022/051884
(87) Internationale Veröffentlichungsnummer: WO 2022/189912

(56) Entgegenhaltungen:
- EP-A1- 3 596 808
- EP-B1- 3 596 808
- WO-A1-2017/016618
- CN-A- 103 378 708
- DE-T2- 69 224 639

## Beschreibung

Die Erfindung betrifft einen Möbelantrieb mit einem elektrischen Antriebsmotor und einer Bremsvorrichtung für den elektrischen Antriebsmotor, wobei der Antriebsmotor eine Abtriebswelle aufweist und die Bremsvorrichtung mindestens ein auf die Abtriebswelle wirkendes Bremselement und einen Kraftspeicher aufweist, wobei der Kraftspeicher das Bremselement permanent mit einer Bremskraft beaufschlagt und wobei der Kraftspeicher und das Bremselement einstückig miteinander ausgebildet sind.

Elektrische Antriebsmotoren werden vielfältig eingesetzt, unter anderem in elektrischen Möbelantrieben, die zur Verstellung eines Möbelteils dienen. Das Möbelteil kann dabei beispielsweise ein Kopf- oder Fußteil eines Bettes oder Sitzmöbels sein. Häufig wird die Antriebskraft des Antriebsmotors über ein Schneckengetriebe mit nachgelagertem Spindelantrieb auf das Möbelteil übertragen. Das Schneckengetriebe wird durch eine auf der Abtriebswelle des Antriebsmotors angebrachte oder ausgebildete Schnecke in Verbindung mit einem Schneckenrad, in das die Schnecke eingreift, gebildet. Das Schneckengetriebe bietet den Vorteil einer hohen reibungsbehafteten Hemmung, wodurch bei ausgeschaltetem Motor ein Absenken eines mit Gewichtskraft belasteten Möbelteils verhindert werden kann.

Insbesondere im Pflegebereich werden hohe Anforderungen an die Selbsthemmung gestellt. Auch bei einem ungünstig gelagerten Patienten darf sich beispielsweise ein Kopf- oder Fußteil eines Krankenhausbettes nicht absenken. Um diesen hohen Anforderungen gerecht zu werden, kann es notwendig sein, zusätzlich zu der Hemmung durch das Schneckengetriebe eine Bremsvorrichtung vorzusehen, die die Abtriebswelle des Motors beim Motorstillstand bremst und somit ein Absenken des Möbelteils sicher verhindert.

Solche Bremsvorrichtungen können als aktiv ansteuerbare Bremsen ausgebildet sein, die beispielsweise elektromechanisch betätigt die Abtriebswelle des Motors im Stillstand abbremsen.

Alternativ können auch nicht aktiv angesteuerte Bremsen für eine Abtriebswelle eines elektrischen Antriebsmotors eingesetzt werden. Derartige Bremsen sind aus den Druckschriften DE 20 2004 008 713 U1 und DE 20 2004 008 714 U1 bekannt. Bei diesen Bremsvorrichtungen erfolgt eine leichte permanente Bremsung der Abtriebswelle, die im Betrieb des Antriebsmotors durch dessen Drehmoment überwunden wird, die aber dennoch ausreichend groß ist, um im Stillstand in Verbindung mit der Selbsthemmung durch das Schneckengetriebe eine unbeabsichtigte Drehung des elektrischen Antriebsmotors durch Belastung des verstellbaren Möbelteils zu verhindern.

Die in den genannten Schriften vorgestellten Bremsvorrichtungen weisen jeweils eine Kraftspeichereinrichtung, beispielsweise eine Feder auf, die ein Bremselement permanent mit einer Bremskraft beaufschlagen. Durch die Bremskraft wird das Bremselement z.B. gegen einen Bremsläufer gedrückt, der drehfest mit der Abtriebswelle des Motors in Verbindung steht. Sie sind gegenüber aktiv angesteuerten Bremsvorrichtungen in ihrem Aufbau einfacher und deshalb grundsätzlich kostengünstiger. Sie sind dennoch nicht unaufwändig in der Herstellung, da sichergestellt sein muss, dass die in der Regel aus unterschiedlichen Materialien bestehenden Kraftspeicher und Bremselemente sicher mit einander verbunden sind, ohne dass dieses den Fertigungsaufwand erhöht.

Aus den Druckschriften WO 2017/016618 A1 und EP 3 596 808 A1 sind passive Bremsvorrichtungen bekannt, bei denen Kraftspeicher und Bremselement einstückig ausgebildet sind. Dem liegt die Idee zu Grunde, dass bei entsprechender Formgebung das Bremselement selbst eine ausreichende Federwirkung erzielen kann, um eine benötigte Bremskraft aufzubringen. Beispielsweise kann die Bremsvorrichtung ringförmig ausgebildet sein, wobei ein in sich geschlossener ringförmiger Grundkörper eine zentrale Öffnung zur Aufnahme eines Abschnitts der Abtriebswelle des Antriebsmotors aufweist. Bevorzugt sind im Grundkörper radial und/oder schräg verlaufende und nach innen und/oder außen offene Einschnitte eingebracht. Dadurch, dass der Grundkörper umlaufend in sich geschlossen ist, kann er aus sich heraus eine radial wirkende Bremskraft auf die durch die zentrale Öffnung geführte Abtriebswelle ausüben.

Die in den Schriften WO 2017/016618 A1 bzw. EP 3 596 808 A1 angegebenen Bremsvorrichtungen sind einfach herzustellen und kostengünstig und werden erfolgreich insbesondere bei elektromotorischen Möbelantrieben eingesetzt.

Es ist eine Aufgabe der vorliegenden Erfindung, einen Möbelantrieb mit elektrischem Antriebsmotor und Bremsvorrichtung der eingangs genannten Art weiter zu verbessern, um eine möglichst gute Bremswirkung im Stand bei nur geringen Verlusten im Betrieb zu erzielen.

Diese Aufgabe wird gelöst durch einen Möbelantrieb mit den Merkmalen des unabhängigen Anspruchs. Vorteilhafte Ausgestaltungen und Weiterbildungen sind in den abhängigen Ansprüchen angegeben.

Ein erfindungsgemäßer Möbelantrieb der eingangs genannten Art zeichnet sich dadurch aus, dass bei der Bremsvorrichtung Haft- bzw. Gleitreibungskoeffizienten zwischen der Reibfläche des Bremselements und der Abtriebswelle sich um einen Faktor von mindestens 1,3 und insbesondere mindestens 1,5 unterscheiden. Weiter ist zudem bei dem Möbelantrieb eine EMK (elektromotorische Kraft)-Bremse vorgesehen, die beispielsweise durch Herbeiführen eines Kurzschlusses an Anschlüssen des Antriebsmotors durch eine Steuereinrichtung des Möbelantriebs aktiviert wird.

Die Erfindung basiert auf der Erkenntnis, dass eine Kombination einer EMK-Bremsung und einer passiven Reibungsbremse besonders gute Bremseigenschaften erzielt, wenn ein relativ großer Unterschied zwischen dem Haft- und dem Gleitreibungskoeffizienten für die Paarung Bremselement/Abtriebswelle vorliegt. Dieser kann z.B. durch geeignete Materialauswahl und Oberflächenbeschaffenheit erzielt werden, wobei die Abtriebswelle in der Regel aus einem festen, aber ungehärteten Stahl gefertigt ist. Der möglichst große Unterschied führt zu einer guten Bremswirkung im Stillstand und einer geringen Bremswirkung bei Rotation des Antriebsmotors und damit zu geringen Verlusten im Betrieb.

Eine EMK-Bremsung ist wegen des ausgenutzten generatorischen Effekts umso wirksamer, je höher die Drehzahl des Antriebsmotors ist. So kann der Antriebsmotor mit Hilfe der EMK-Bremse schnell von hoher auf eine geringe Drehzahl gebracht werden. Eine EMK-Bremse lässt sich zudem mit nur geringem Bauteileaufwand einfach realisieren. Sobald die geringe Drehzahl erreicht ist, greift die passive Bremsvorrichtung, da der relativ zum Gleitreibungskoeffizienten hohe Haftreibungskoeffizient nicht erst im Stillstand der Abtriebswelle, sondern auch schon bei geringen Drehzahlen und Annäherung an den Stillstand zu einer hohen Bremswirkung führt. Der Grund ist, dass durch elastische Verformungen innerhalb der Bremsvorrichtung auch bei noch geringen Drehzahlen der Abtriebswelle bereits kurzzeitig ein Stillstand der Reibfläche gegenüber der Oberfläche der Abtriebswelle auftreten kann, der dann in einem Übergang von der Gleit- in die Haftreibung resultiert. Auch wenn die Haftreibung beim Weiterdrehen der Abtriebswelle wieder überwunden wird, hat kurzzeitig ein Haftreibungseffekt gewirkt und somit im Mittel eine höhere als die reine Gleitreibung. Die Bremswirkung ist daher effektiv auf höher als durch den Gleitreibungskoeffizienten beschrieben. Der Zeitanteil, für den dieser Effekt bei einer gegebenen Drehzahl auftritt, ist umso größer, je größer der Faktor zwischen dem Haft- und dem Gleitreibungskoeffizienten ist. Mit dem Zeitanteil steigt auch die Überhöhung der Bremswirkung durch diesen Effekt bei noch erfolgender Drehung der Abtriebswelle.

Wegen des hohen Unterschiedes zwischen der Gleit- und der Haftreibung der Bremsvorrichtung ist damit ein ausgeprägter Übergangsbereich der Bremswirkung gebildet, welcher sich in einer Spanne von einer geringen Drehzahl, also einer Drehzahl nahe dem Stillstand, bis zur Drehzahl Null erstreckt. Die Spannweite dieses ausgeprägten Überganges liegt im Bereich Null bis Ein Umdrehungen pro Sekunde. Die Spannweite und der physikalische Charakter des Übergangsbereichs ist bevorzugt drehrichtungsunabhängig ausgebildet, kann aber alternativ und abhängig von Geometrien und Oberflächenbeschaffenheiten der Reibpartner drehrichtungsabhängig differieren.

Besonders bevorzugt ist der Möbelantrieb als Spindelantrieb, insbesondere Spindelhubantrieb ausgebildet. Durch die Spindel, ggf. in Kombination mit einem Schneckenantrieb, weist der Möbelantrieb bereits ein hohe Selbsthemmung auf. Zusammen mit der erfindungsgemäßen Kombination von passiver Bremsvorrichtung und EMK-Bremse wird eine sichere Abbremsung erreicht.

Als Material des Bremselements kann beispielsweise Zink oder Bronze oder ein möglichst hochtemperaturbeständiger Kunststoff, beispielsweise PEEK (Polyetheretherketon) verwendet werden.

Die genannten Materialien sind in der Regel weicher als das üblicherweise verwendete Material der Abtriebswelle, nämlich fester, ungehärteter Stahl, so dass ein Bremsen der Abtriebswelle keine Beschädigung der Oberfläche der Abtriebswelle zur Folge hat. Dennoch sind die genannten Materialien hart genug, um eine Bremswirkung möglichst verschleißfrei und damit für einen langen Lebensdauerzyklus zu erzielen. Werden zudem weitere Mittel wie Schmiermittel verwendet, die sehr dünn aufgetragen sein können, wird die Lebensdauer weiter erhöht. Bei geeigneter Auswahl verringern die Schmiermittel den Faktor zwischen der Haft- und der Gleitreibung nicht oder können im Gegenteil ihn sogar erhöhen.

**In** einer vorteilhaften Ausgestaltung des Möbelantriebs sind der Kraftspeicher und das Bremselement aus dem gleichen Material gefertigt, wodurch die Herstellungskosten und der Herstellungsaufwand weiter gesenkt werden können.

**In** einer weiteren vorteilhaften Ausgestaltung des Möbelantriebs ist die Bremsvorrichtung ringförmig ausgebildet, wobei ein in sich geschlossener ringförmiger Grundkörper eine zentrale Öffnung zur Aufnahme eines Abschnitts der Abtriebswelle des Antriebsmotors aufweist. Bevorzugt sind im Grundkörper radial und/oder schräg verlaufende und nach innen und/oder außen offene Einschnitte eingebracht. Dadurch, dass der Grundkörper umlaufend in sich geschlossen ist, kann er aus sich heraus, d.h. ohne Unterstützung durch externe Komponenten, eine radial wirkende Bremskraft auf die durch die zentrale Öffnung geführte Abtriebswelle ausüben.

Durch die Einschnitte wird die Materialstärke des ringförmigen Grundkörpers reduziert, so dass der Grundkörper leichter aufgeweitet werden kann und die gewünschte Federwirkung erzielt wird. Die Anzahl und Tiefe der Einschnitte ermöglicht es dabei, die gewünschte Federkraft und auch den Federweg für das verwendete Materials des Grundkörpers einzustellen. So kann ein an sich relativ hartes und in sich nicht besonders elastisches Material für den Grundkörper verwendet werden, das sich entsprechend trotz der aufgebrachten Bremswirkung wenig abnutzt und sich dennoch eine Federwirkung mit ausreichendem Federweg und einer benötigten und insbesondere nicht zu starken Federkraft ergibt. Mehrere Einschnitte können bevorzugt sternförmig angeordnet sein. Es können sich bevorzugt nach innen und nach außen offene Einschnitte umlaufend abwechseln.

Die genannte Bremsvorrichtung kann in ihrer ringförmigen Ausgestaltung einfach und platzsparend auf die Abtriebswelle gesteckt an den Motorgehäuse anliegen oder in eine Aufnahme in das Motorgehäuse eingesetzt werden. Zur Festlegung der Bremsvorrichtung muss lediglich ein axiales Verrutschen der Motorwelle verhindert werden, was durch Halte- oder Rastvorsprünge erreicht werden kann. Weiterhin ist die Bremsvorrichtung gegen Verdrehen zu sichern, was beispielsweise ebenfalls durch Rast- oder Haltevorsprünge, die am Motorgehäuse angeordnet sind, erfolgen kann. Diese Vorsprünge können beispielsweise in die genannten Einschnitte im Grundkörper der Bremsvorrichtung eingreifen. Alternativ können am äußeren Umfang des Grundkörpers Vorsprünge angeordnet sein, die in Vertiefungen von Halteelementen, die beispielsweise am Motorgehäuse angeordnet sind, zusammenwirken und die Bremsvorrichtung unverdrehbar am Motorgehäuse fixieren. Die Halte- oder Rastvorsprünge bzw. die Halteelemente können am Motorgehäuse selbst oder an einer Motorhalterung angeordnet bzw. ausgebildet sein.

Besonders vorteilhaft bildet eine Oberfläche des Grundkörpers selbst die Reibfläche des mindestens einen Bremselements. Auf diese Weise wird ein besonders einfacher Aufbau der Bremsvorrichtung erzielt, insbesondere wenn das Bremselement aus Kunststoff in einem Spritzgussverfahren hergestellt ist.

Alternativ ist es jedoch auch möglich, mindestens ein zusätzliches Ringsegment auf den Grundkörper aufzubringen, das zur zentralen Öffnung hinweist. **In** dem Fall bildet eine Oberfläche des Ringsegments die Reibfläche des mindestens einen Bremselements. So kann unabhängig vom Material des Grundkörpers eine zur Bremsung besonders geeignete Reibfläche bereitgestellt werden.

**In** einer weiteren vorteilhaften Ausgestaltung des Möbelantriebs ist die Bremsvorrichtung in oder an einer Motorhalterung, z.B. einer Motorhalteplatte oder einer Motorflanschaufnahme, ausgebildet. Hierdurch werden Herstellungs- und Montageaufwand des Möbelantriebs weiter verringert. Eine Ausführung einer Motorflanschaufnahme ist durch ein Gehäuseteil oder ein Getriebegehäuseteil des Möbelantriebs gebildet, an welches der Motor angeflanscht und befestigt ist. Dabei verfügt das Gehäuse oder das Getriebegehäuse über eine Aufnahme der Bremsvorrichtung. Die Aufnahme kann als Vertiefung ausgebildet sein und die Bremsvorrichtung kann dort eingesetzt sein. Die Aufnahme der Bremsvorrichtung verfügt über Vorsprünge oder Vertiefungen wie eingangs beschrieben zur drehfesten Verbindung und drehfesten Halterung der Bremsvorrichtung.

Alternativ kann mit gleichem Vorteil die Bremsvorrichtung auch in den elektrischen Antriebsmotor integriert sein und dort insbesondere zusätzlich die Funktion eines Gleitlagers für die Abtriebswelle einnehmen. Insbesondere das hintere Achslager eines Antriebsmotors ist häufig nicht als Kugellager, sondern als Gleitlager ausgebildet. Das standardmäßig vorgesehene Gleitlager kann durch die erfindungsgemäße Bremsvorrichtung mit Gleitlagerfunktion ersetzt werden.

Die Bremsvorrichtung kann mit einem getriebelosen Antriebsmotor verwendet werden, bei dem die Abtriebswelle eine Ankerwelle des Motors ist. Sie kann aber auch bei einem Getriebemotor eingesetzt werden, bei dem Motor und Getriebe ggf. eine Einheit bilden und bei dem die Abtriebswelle eine Getriebewelle ist.

Die Erfindung wird nachfolgend anhand von Ausführungsbeispielen mit Hilfe von Figuren näher erläutert. Die Figuren zeigen:
- Figur 1: eine isometrische Gesamtansicht eines Möbelantriebs;
- Figur 2: der Möbelantrieb der Figur 1 in einer teilweisen Explosionsdarstellung;
- Figur 3: eine Seitenansicht des Möbelantriebs der Figur 1 ohne Antriebsmotor;
- Figuren 4a, 4b: jeweils eine isometrische Darstellung eines Antriebsmotors mit einer auf einer Abtriebswelle des Antriebsmotors aufgesetzten Bremsvorrichtung;
- Figur 4c: eine Darstellung des Antriebsmotors der Figuren 4a und 4b ohne Bremsvorrichtung;
- Figuren 5a, 5b: jeweils eine Draufsicht und eine isometrische Darstellung des Bremselements der Figuren 4a und 4b;
- Figuren 6a - 6c: jeweils eine isometrische Darstellung eines weiteren Ausführungsbeispiels einer Bremsvorrichtung; und
- Figuren 7a, 7b, 8: jeweils eine Draufsicht eines weiteren Ausführungsbeispiels einer Bremsvorrichtung.

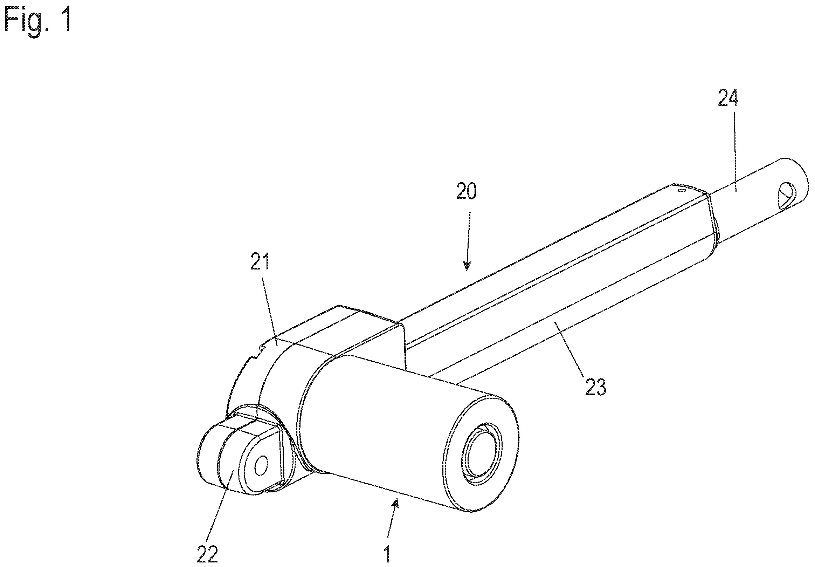

In Figur 1 ist zunächst ein elektromotorischer Möbelantrieb 20 in einer isometrischen Gesamtansicht dargestellt. Der Möbelantrieb 20 ist ein sogenannter Spindelhubantrieb, bei dem eine Drehbewegung eines Antriebsmotors 1 mittels einer Spindel in eine lineare Hubbewegung umgesetzt wird.

Der Möbelantrieb 20 weist dazu ein Getriebegehäuse 21 auf, an dem der Antriebsmotor 1 befestigt ist. Das Getriebegehäuse 21 ist mit einem Montageelement 22 versehen, hier einem Montageauge, mit dem der Möbelantrieb 20 auf einer Seite mit einem Möbel gekoppelt wird.

Am Getriebegehäuse 21 ist weiter ein Führungsrohr 23 angeordnet oder integral mit diesem ausgebildet, das ein Hubrohr 24 führt, das über die genannte Spindel vor und zurück bewegt werden kann. Das frei Ende des Hubrohrs 24 ist ebenfalls mit dem Möbel gekoppelt, um die Bewegung auf das Möbel zu übertragen.

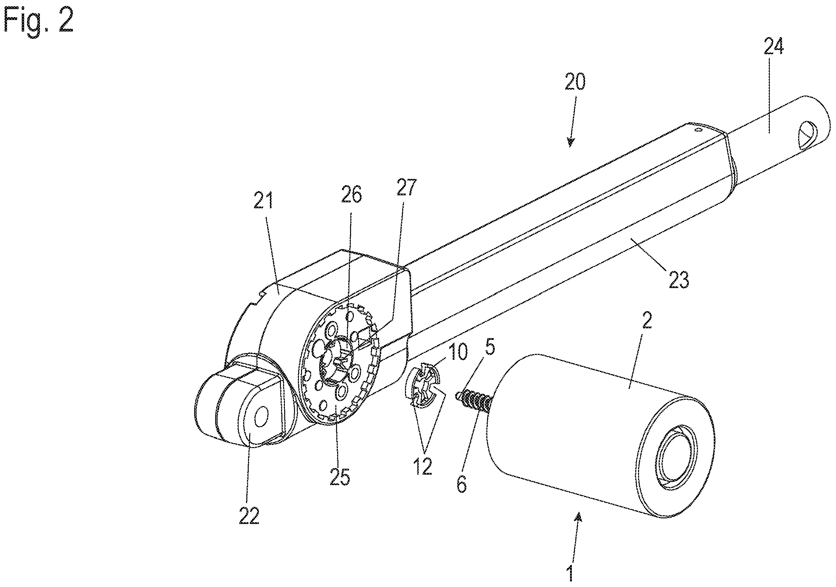

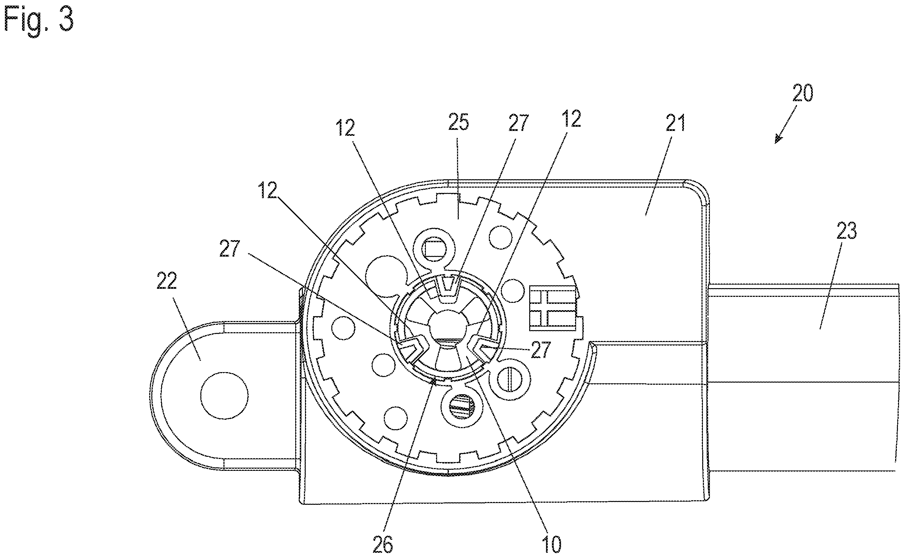

Figur 2 zeigt eine isometrische Teilexplosionszeichnung des Möbelantriebs 20 und Figur 3 gibt einen Ausschnitt des Möbelantriebs 20 in einer Seitenansicht wieder. Bei Figur 3 ist der Antriebsmotor 1 entfernt, um eine Ansicht des Bereichs des Getriebegehäuses 21 zu ermöglichen, in dem der Antriebsmotor 1 befestigt ist.

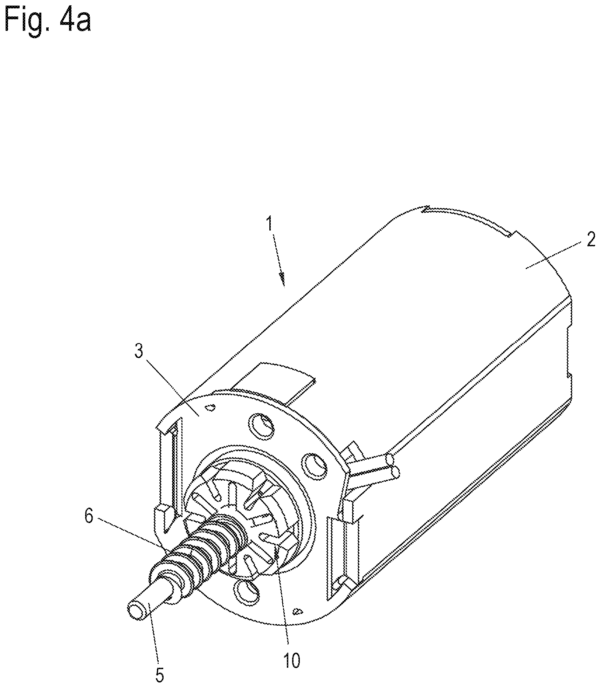

Vorliegend ist am Getriebegehäuse 21 eine topfförmige Motorflanschaufnahme 25 ausgebildet, in die der Antriebsmotor 1 mit einer Flanschplatte (vgl. Bezugszeichen 3 in Figur 4a) eingesetzt wird und mit der er verschraubt wird. Wie in Figur 2 sichtbar ist, weist der Antriebsmotor 1 seinerseits ein Gehäuse 2 auf, über das in Richtung des Getriebegehäuses 21 eine Abtriebswelle 5 hervorragt, die mit einer Schnecke 6 versehen ist. Bei anmontiertem Antriebsmotor 1 ragt die Schnecke 6 in das Getriebegehäuse 21 hinein und kämmt dort mit einem hier nicht sichtbaren Schneckenrad, das die genannte Spindel antreibt.

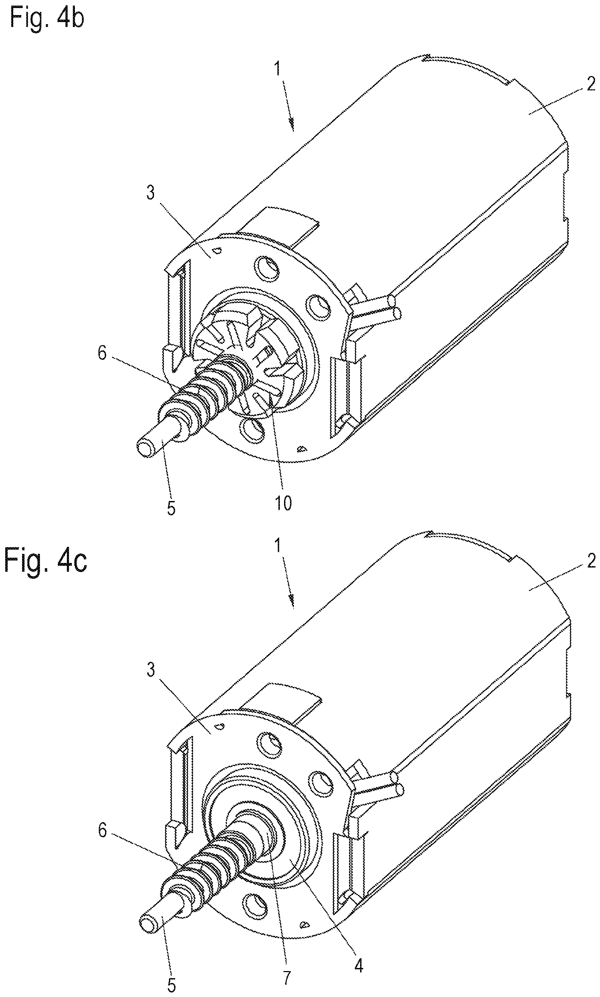

In der Motorflanschaufnahme 25 ist zentral eine Vertiefung ausgebildet, die als Bremsringaufnahme 26 dient und in die ein Bremsvorrichtung 10 formschlüssig eingesetzt ist. Die Bremsvorrichtung 10 wirkt auf einen Abschnitt der Abtriebswelle 5 ein, wie im Zusammenhang mit den Figuren 4a, b noch detaillierter beschrieben ist. Die ringförmig ausgebildete Bremsvorrichtung 10 weist entlang ihres Umfangs Einschnitte 12 auf, in die Vorsprünge 27 der Bremsringaufnahme 26 eingreifen, um die Bremsvorrichtung 10 drehfest in der Bremsringaufnahme 26 zu halten.

Die Figuren 4a und 4b zeigen in jeweils gleicher Weise einen elektrischen Antriebsmotor 1 mit einer Bremsvorrichtung 10 in einer isometrischen Ansicht. Figur 4c zeigt in ebenfalls gleicher Darstellung den Antriebsmotor 1 ohne eine Bremsvorrichtung. Der Antriebsmotor 1 ist dem in den Figuren 1 bis 3 vergleichbar und könnte ebenso in dem Möbelantrieb 20 der Figuren 1 bis 3 eingesetzt werden.

Der Antriebsmotor 1 weist wiederum ein Gehäuse 2 auf mit einer Flanschplatte 3, an der Befestigungsmöglichkeiten für den Antriebsmotor 1 vorhanden sind. Weiter ist zentral in der Flanschplatte 3 ein Lager 4 (vgl. Figur 4c) für eine Abtriebswelle 5 des Antriebsmotors 1 angeordnet. Das Lager 4 kann in einem Lagersitz der Flanschplatte 3 entweder von außen zugänglich oder von der Innenseite des Gehäuses 2 her eingesetzt gehalten sein. Auf der gegenüber liegenden Seite des Gehäuses 2 ist ein vergleichbares Lager für die Abtriebswelle 5 angeordnet. Vorliegend ist das in der Flanschplatte 3 vorgesehene Lager 4 beispielsweise ein Wälzlager, z. B. ein Kugellager oder ein Rollenlager. Das auf der gegenüberliegenden Seite angeordnete Lager kann ebenfalls ein derartiges Wälzkörperlager vorgesehen sein oder auch ein Gleitlager.

Die Abtriebswelle 5 steht über die Flanschplatte 3 hervor. Neben einem optionalen Lagerzapfen am Ende der Abtriebswelle 5 ist diese mit einer Schnecke 6 versehen. Die Schnecke 6 kann ein separates und auf die Abtriebswelle 5 aufgesetztes Teil sein, oder aber integral mit der Abtriebswelle 5 ausgebildet sein. Im Bereich des Lagers 4 ragt die Abtriebswelle 5 zunächst mit einem Achsabschnitt 7 über die Flanschplatte 3 hinaus, bevor sich an diesen die Schnecke 6 anschließt. Der Achsabschnitt 7 ist zylindrisch mit einer glatten Oberfläche ausgebildet, wobei der Durchmesser des Achsabschnitts 7 den äußeren Durchmesser der Schnecke 6 zumindest leicht übersteigt.

Wie die Figuren 4a bis 4c zeigen, ist die Bremsvorrichtung 10 jeweils ringförmig ausgebildet und so weit auf die Abtriebswelle 5 aufgesteckt, dass sie im Wesentlichen an der Flanschplatte 3 anliegt und auf den Achsabschnitt 7 der Abtriebswelle 5 wirkt.

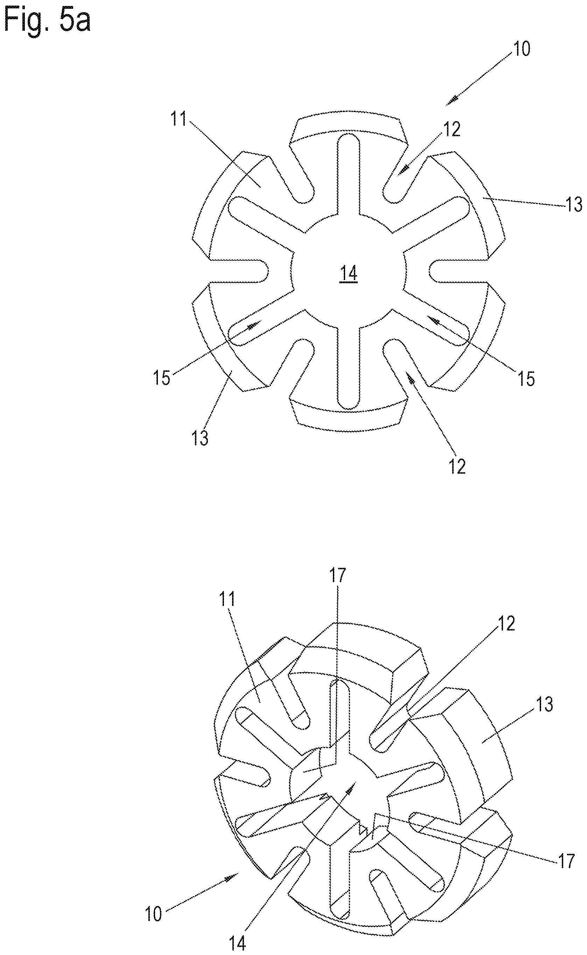

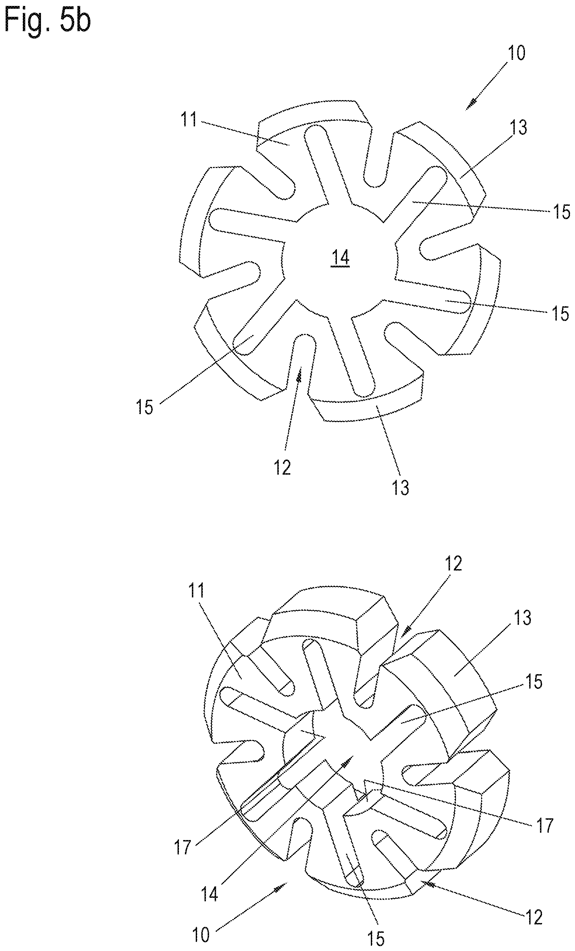

Die beiden Ausführungsbeispiele der Bremsvorrichtung 10 gemäß den Figuren 4a und 4b sind in den Figuren 5a und 5b jeweils genauer dargestellt. Die Figu-ren 5a und 5b zeigen jeweils in ihrem oberen Teil eine Draufsicht auf die Bremsvorrichtung 10 und im unteren Teil eine isometrische Schrägansicht auf die Bremsvorrichtung 10.

Die in den Figuren 4a und 5a dargestellte Bremsvorrichtung 10 weist einen einstückigen Grundkörper 11 auf. Dieser ist vorliegend aus einem Vollmaterial aus Metall, beispielsweise Zink oder Bronze oder aus einem harten und bevorzugt hitzebeständigen Kunststoff, beispielsweise PEEK (Polyetheretherketon) gefertigt. Die Materialkombination und die Oberflächeneigenschaften einer Reibfläche der Bremsvorrichtung 10 und des Achsabschnitts 7 sind so gewählt, dass Haft- bzw. Gleitreibungskoeffizienten zwischen der Reibfläche und der Abtriebswelle sich um einen Faktor von mindestens 1,3 und insbesondere mindestens 1,5 unterscheiden. Bei polymeren Kunststoffen kann beispielsweise auch die Art des Vernetzungsgrades für die Höhe des Faktors bedeutsam sein. Insbesondere strahlungsvernetzte Kunststoffe weisen einen hohen Haftreibungskoeffizienten relativ zum Gleitreibungskoeffizienten auf. Die Dicke des Grundkörpers 11 liegt vorliegend im Bereich von einigen Millimetern und entspricht damit im Wesentlichen der Länge des Achsabschnittes 7 (vgl. Figur 4c).

In den Grundkörper 11 sind von außen nach innen ragende Einschnitte 12 eingebracht, die nachfolgend auch als äußere Einschnitte 12 bezeichnet werden. Vorliegend sind sechs äußere Einschnitte 12 vorgesehen, die gleichmäßig verteilt sternfömig angeordnet sind. Bedingt durch die äußeren Einschnitte 12 verbleiben vom Grundkörper 11 im äußeren Bereich radial hervorstehende Abschnitte 13, die zur drehfesten Fixierung der Bremsvorrichtung 10 eingesetzt werden können. Beispielsweise können an den Abschnitten 13 Vorsprünge ausgebildet sein, die in ortsfeste (relativ zum Gehäuse 2 des Antriebsmotors 1 gesehen) Haltenuten eingreifen. Alternativ kann eine drehfeste Halterung durch ortsfeste Vorsprünge (vgl. Bezugszeichen 17 in Figur 2) erfolgen, die in die Einschnitte 12 eingreifen, wie das bei dem Ausführungsbeispiel der Figur 2 zu sehen ist.

Versetzt zu den äußeren Einschnitten 12 sind innere Einschnitte 15 vorhanden, die den Grundkörper 11 von der zentralen Öffnung 14 aus nach außen hin einschneiden. Bedingt durch die äußeren und die inneren Einschnitte 12, 15 erhält die Bremsvorrichtung 10 eine Federwirkung in radialer Richtung. Zwischen den inneren Einschnitten 15 verbleiben im Bereich der zentralen Öffnung 14 Abschnitte des Grundkörpers 11, die als Bremselemente 17 auf dem entsprechenden Achsabschnitt 7 der Abtriebswelle 5 drücken. Durch Anpassung der Anzahl und der Tiefe der inneren Einschnitte 15, aber auch der äußeren Einschnitte 12 kann die Federwirkung des Grundkörpers 11 in weiten Bereichen variiert und damit an die erforderlichen Bedürfnisse angepasst werden.

In den Figuren 4b und 5b ist ein zweites Ausführungsbeispiel der Bremsvorrichtung 10 dargestellt. Die Bremsvorrichtung 10 entspricht in ihrem Grundaufbau der des ersten Ausführungsbeispiels gemäß den Figuren 4a bzw. 5a. Im Unterschied dazu verlaufen die äußeren Einschnitte 12 und die inneren Einschnitte 15 hierbei jedoch nicht genau radial, sondern schräg nach außen bzw. innen. In alternativen Ausgestaltungen kann vorgesehen sein, dass nur die äußeren oder nur die inneren Einschnitte 12, 15 schräg verlaufen, wohingegen die andere Art der Einschnitte 12, 15 radial verlaufen.

Durch die Schrägstellung von zumindest einer Art der Einschnitte 12, 15 wird eine Asymmetrie im Bremsverhalten im Hinblick auf die Drehrichtung der Abtriebswelle 5 relativ zur Bremsvorrichtung 10 erzielt. Je nach Drehrichtung der Abtriebswelle 5 wird eine auflaufende oder ablaufende Wirkung an den Bremselementen 17 erzielt, durch die die Bremswirkung in eine der Drehrichtungen verstärkt und in der anderen der Drehrichtungen abgeschwächt wird. So kann beispielsweise erreicht werden, dass bei einem elektromotorischen Möbelantrieb die Richtung, in der ein Absenken des Möbelteils durch erhöhte Gewichtsbelastung einsetzen könnte, eine erhöhte Bremswirkung erfährt.

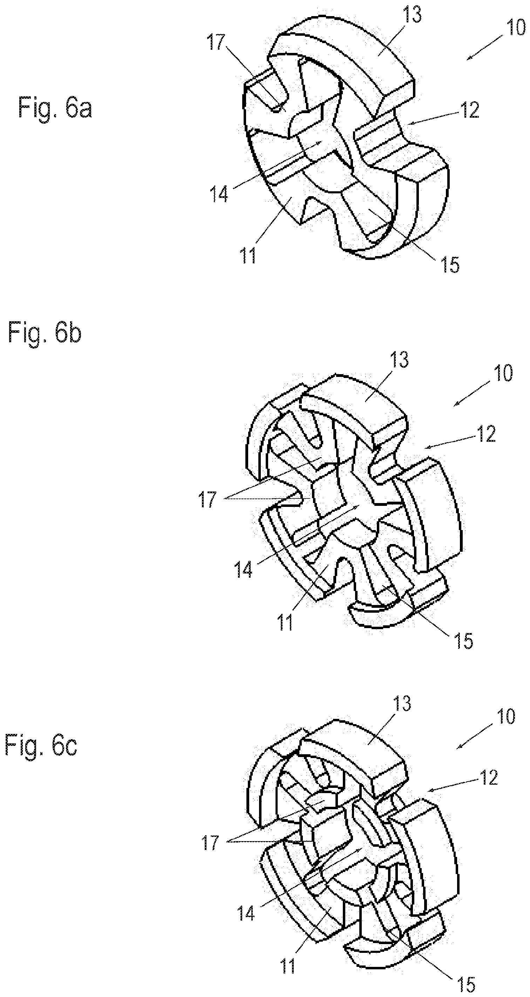

**In** den Figuren 6a bis 6c sind drei weitere Ausführungsbeispiele einer anmeldungsgemäßen Bremsvorrichtung 10 in jeweils einer isometrischen Darstellung wiedergegeben. Auch diese Bremsvorrichtungen 10 entsprechen in ihrem Grundaufbau der des ersten Ausführungsbeispiels gemäß den Figuren 4a bzw. 5a, auf deren Beschreibung hiermit explizit verwiesen wird. Gleiche Bezugszeichen kennzeichnen bei diesen wie allen folgenden Ausführungsbeispielen gleiche oder gleichwirkende Elemente wie bei den vorherigen Ausführungsbeispielen.

Bei der Bremsvorrichtung 10 gemäß Figur 6a sind anstelle der beim ersten Ausführungsbeispiel gezeigten sechs Bremselemente 17 drei Bremselemente 17 und entsprechend ebenso jeweils drei innere Einschnitte 15 und drei äußere Einschnitte 12 vorgesehen. Prinzipiell könnte die gezeigte Bremsvorrichtung 10 auch mit nur zwei Bremselementen 17 ausgebildet sein, ohne dass der grundsätzliche Aufbau und die Funktionsweise unterschiedlich wären.

Bei den in den Figuren 6b und 6c gezeigten Ausführungsbeispielen, die grundsätzlich ebenfalls dem ersten Ausführungsbeispiels gemäß Figur 4a bzw. 5a entsprechen, sind fünf Bremselemente 17 und entsprechend fünf innere Einschnitte 15 bzw. äußere Einschnitte 12 vorgesehen. Bei dem Ausführungsbeispiel der Figur 6b ist der Grundkörper 11 innen in axialer Richtung dünner als an seinem äußeren Rand. Beim Ausführungsbeispiel der Figur 6c weist die Bremsvorrichtung 10 im Bereich der Bremselemente wiederum eine größere Dicke auf, die beispielsweise gleich der Dicke im äußeren Bereich gewählt sein kann.

Mit den gezeigten Profilierungen des Grundkörpers 11 kann zum einen eine Material- und damit Kosten- bzw. Gewichtseinsparung erzielt werden, und zum anderen können die wirkenden Federkräfte beeinflusst werden.

Andere Parameter, mit denen die Federkraft beeinflusst werden kann, sind der Gesamtdurchmesser (äußerer Durchmesser) der Bremsvorrichtung 10, die Anzahl der Bremselemente 17 bzw. der inneren und äußeren Einschnitte 15, 12 sowie die Tiefe der inneren bzw. äußeren Einschnitte 12, 15.

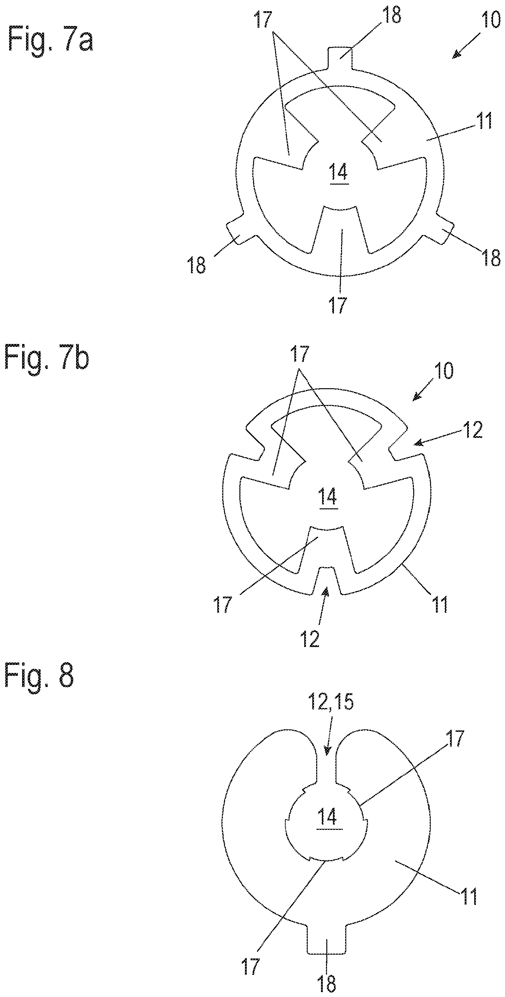

Bei den in den Figuren 7a und 7b gezeigten Ausführungsbeispielen, die grundsätzlich ebenfalls dem ersten Ausführungsbeispiels gemäß Figur 4a bzw. 5a entsprechen, sind drei Bremselemente 17 vorgesehen.

Bei dem Ausführungsbeispiel der Figur 7a ist der Grundkörper 11 als geschlossener Ring ausgebildet und in sich federelastisch gestaltet. Die federnde Wirkung wird z.B. durch die bogenförmigen Verbindungsabschnitte des Grundkörpers 11 zwischen den Bremselementen 17 erzielt. Die Ausführung nach Figur 7a weist an der äußeren Mantelfläche des ringförmigen Grundkörpers 11 nach außen hervorspringende Vorsprünge 18, hier in der Form von Stegen, zur drehfesten Verbindung auf. Dabei steht jeder der Vorsprünge 18 in einem Winkelversatz zum Bremselement 17, wobei der Winkelversatz 60° beträgt und damit eine symmetrische Anordnung zwischen den Vorsprüngen 18 und den Bremselementen 17 gegeben ist. Es sei aber erwähnt, dass die Position der Vorsprünge 18 relativ zu den Bremselementen 17 auch anders als hier dargestellt gewählt sein kann, z.B. deckungsgleich und konzentrisch zueinander angeordnet sein.

Die Ausführung nach Figur 7b weist an der äußeren Mantelfläche des ringförmigen Grundkörpers 11 nach innen gerichtete Einschnitte 13 zur drehfesten Verbindung auf. Da die Einschnitte in die Bremselemente 17 von außen hinein verlaufen, kann bei dieser Ausführung der Grundkörper 11 noch als geschlossenen oder im Wesentlichen geschlossen angesehen werden. Exemplarisch sind gemäß den Ausführungen nach den Figuren 7a und 7b drei Vorsprünge 18 beziehungsweise drei nach innen gerichtete Einschnitte 13 gezeigt, wobei alternativ mindestens ein Vorsprung 18 beziehungsweise ein Einschnitt 13 vorgesehen ist.

Figur 8 illustriert eine weitere alternative Bauweise einer Bremsvorrichtung 10 mit Grundkörper 11 und drei Bremselementen 17. Auch hier liegt eine ringförmige Bauweise vor, wobei der Grundkörper 11 als scheibenförmiger Ring mit einem durchgehenden Einschnitt versehen ist, der von der zentralen Öffnung 14 ausgehend in den Grundkörper eingebracht ist und diesen bis zur äußeren Mantelfläche durchdringt. Der Einschnitt kann somit als eine Kombination eines inneren und eines äußeren Einschnitts 12, 15 angesehen werden. Ferner ist auch hier an der äußeren Manteloberfläche des Grundkörpers 11 ein Vorsprung 18 zur Verdrehsicherung vorgesehen. Exemplarisch ist nur ein Steg gezeigt, es können alternativ auch mehrere vorgesehen sein.

Die Anordnung der Bremsvorrichtungen sowie die jeweilige drehfeste Verbindung der Ausführungen nach den Figuren 7a, 7b und 8 erfolgt entsprechend den zuvor beschriebenen Ausführungen, auf die hiermit verwiesen wird.

### Bezugszeichen

1 Antriebsmotor
2 Gehäuse
3 Flanschplatte
4 Lager
5 Abtriebswelle
6 Schnecke
7 Achsabschnitt
10 Bremsvorrichtung
11 Grundkörper
12 äußerer Einschnitt
13 hervorstehender Abschnitt
14 zentrale Öffnung (Achsaufnahme)
15 innerer Einschnitt
16 Federzunge
17 Bremselement
18 Vorsprung
20 Möbelantrieb
21 Getriebegehäuse
22 Montagemittel
23 Führungsrohr
24 Hubrohr
25 Motorflanschaufnahme
26 Bremsringaufnahme
27 Vorsprung

## Patentansprüche

1. Möbelantrieb mit einem elektrischen Antriebsmotor (1) und einer Bremsvorrichtung (10)
- wobei der Antriebsmotor (1) eine über ein Motorengehäuse (2) hervorstehende Abtriebswelle (5) aufweist,
- wobei die Bremsvorrichtung (10) mindestens ein Bremselement (17) und einen Kraftspeicher aufweist, wobei der Kraftspeicher eine Reibfläche des mindestens einen Bremselements (17) permanent mit einer Bremskraft beaufschlagt, und wobei Kraftspeicher und Bremselement (17) einstückig ausgebildet sind,
**dadurch gekennzeichnet, dass**
- Haft- bzw. Gleitreibungskoeffizienten zwischen der Reibfläche des Bremselements (17) und der Abtriebswelle (5) sich um einen Faktor von mindestens 1,3 unterscheiden, und
- dass eine EMK-Bremse für den Antriebsmotor (1) vorgesehen ist.

2. Möbelantrieb (20) nach Anspruch 1, bei dem der Kraftspeicher und das Bremselement (17) aus dem gleichen Material gefertigt sind.

3. Möbelantrieb (20) nach Anspruch 1 oder 2, aufweisend einen ringförmigen Grundkörper (11), der zumindest in einem äußeren Bereich umlaufend geschlossen ist.

4. Möbelantrieb (20) nach Anspruch 2, aufweisend eine zentrale Öffnung (14), mit Innenflächen, die die Reibflächen der Bremsvorrichtung (10) bilden.

5. Möbelantrieb (20) nach Anspruch 3 oder 4, aufweisend mindestens einen Einschnitt (15), der von der zentralen Öffnung (14) ausgehend in den Grundkörper (11) eingebracht ist.

6. Möbelantrieb (20) nach einem der Ansprüche 3 bis 5, aufweisend mindestens einen weiteren Einschnitt (12), der von einem äußeren Umfang des Grundkörpers (11) ausgehend in den Grundkörper (11) eingebracht ist.

7. Möbelantrieb (20) nach Anspruch 5 oder 6, bei dem der Grundkörper (11) jeweils mehrere Einschnitte (12) und/oder mehrere weitere Einschnitte (15) aufweist, die sternförmig angeordnet sind.

8. Möbelantrieb (20) nach Anspruch 7, bei der dem Grundkörper (11) jeweils mehrere Einschnitte (12) und mehrere weitere Einschnitte (15) aufweist, wobei sich die Einschnitte (12) und die weiteren Einschnitte (15) umlaufend abwechseln.

9. Möbelantrieb (20) nach einem der Ansprüche 3 bis 8, bei dem Grundkörper (11) scheibenförmig aus einem Vollmaterial gefertigt ist.

10. Möbelantrieb (20) nach Anspruch 9, bei dem der Grundkörper (11) aus Zink, Bronze oder PEEK besteht.

11. Möbelantrieb (20) nach Anspruch 8 oder 9, bei dem eine Oberfläche des Grundkörpers (11) die Reibfläche des mindestens einen Bremselements (17) bildet.

12. Möbelantrieb (20) nach Anspruch 8 oder 9, bei dem mindestens ein zusätzliches Ringsegment auf den Grundkörper (11) aufgebracht ist und zur zentralen Öffnung (14) hinweist, wobei eine Oberfläche des mindestens einen Ringsegments die Reibfläche des Bremselements (17) bildet.

13. Möbelantrieb (20) nach einem der Ansprüche 1 bis 12, bei dem die Bremsvorrichtung (10) in oder an einer Motorhalterung angeordnet ist.

14. Möbelantrieb (20) nach einem der Ansprüche 1 bis 12, bei dem die Bremsvorrichtung (10) in den elektrischen Antriebsmotor (1) integriert ist.

15. Möbelantrieb (20) nach Anspruch 14, bei dem die Bremsvorrichtung (10) als Gleitlager für die Antriebswelle (5) des elektrischen Antriebsmotors (1) ausgebildet ist.

16. Möbelantrieb (20) nach einem der Ansprüche 1 bis 15, bei dem die EMK-Bremse durch einen Kurzschluss an Anschlüssen des Antriebsmotors (1) durch eine Steuereinrichtung des Möbelantriebs (20) hervorgerufen wird.

17. Möbelantrieb (20) nach einem der Ansprüche 1 bis 16, ausgebildet als Spindelantrieb, insbesondere Spindel-Hubantrieb.

## Claims

1. Furniture drive with an electric drive motor (1) and a braking device (10)
- wherein the drive motor (1) has an output shaft (5) projecting beyond a motor housing (2),
- wherein the braking device (10) comprises at least one braking element (17) and a force accumulator, wherein the force accumulator permanently applies a braking force to a friction surface of the at least one braking element (17), and wherein the force accumulator and the braking element (17) are formed integrally,
**characterized in that**
- static and sliding friction coefficients between the friction surface of the braking element (17) and the output shaft (5) differ by a factor of at least 1.3, and
- that an **EMF** brake is provided for the drive motor (1).

2. Furniture drive (20) according to claim 1, wherein the force accumulator and the brake element (17) are made of the same material.

3. Furniture drive (20) according to claim 1 or 2, comprising an annular base body (11) which is circumferentially closed at least in an outer region.

4. Furniture actuator (20) according to claim 2, comprising a central opening (14), with inner surfaces forming the friction surfaces of the braking device (10).

5. Furniture drive (20) according to claim 3 or 4, comprising at least one incision (15) made in the base body (11) starting from the central opening (14).

6. Furniture drive (20) according to any one of claims 3 to 5, comprising at least one further incision (12) which is made in the base body (11) starting from an outer circumference of the base body (11).

7. Furniture drive (20) according to claim 5 or 6, in which the base body (11) has in each case a plurality of incisions (12) and/or a plurality of further incisions (15) which are arranged in a star shape.

8. Furniture drive (20) according to claim 7, in which the base body (11) has in each case a plurality of incisions (12) and a plurality of further incisions (15), the incisions (12) and the further incisions (15) alternating circumferentially.

9. Furniture drive (20) according to any one of claims 3 to 8, wherein the base body (11) is disc-shaped and made of a solid material.

10. Furniture drive (20) according to claim 9, wherein the base body (11) is made of zinc, bronze or **PEEK.**

11. Furniture drive (20) according to claim 8 or 9, wherein a surface of the base body (11) forms the friction surface of the at least one braking element (17).

12. Furniture drive (20) of claim 8 or 9, wherein at least one additional ring segment is applied to the base body (11) and faces the central opening (14), a surface of the at least one ring segment forming the friction surface of the braking element (17).

13. Furniture drive (20) according to any one of claims 1 to 12, wherein the braking device (10) is arranged in or on a motor mount.

14. Furniture drive (20) according to any one of claims 1 to 12, wherein the braking device (10) is integrated into the electric drive motor (1).

15. Furniture drive (20) according to claim 14, in which the braking device (10) is designed as a sliding bearing for the drive shaft (5) of the electric drive motor (1).

16. Furniture drive (20) according to any one of claims 1 to 15, wherein the **EMF** braking is caused by a short circuit at terminals of the drive motor (1) by a control device of the furniture drive (20).

17. Furniture drive (20) according to any one of claims 1 to 16, designed as a spindle drive, in particular a spindle lifting drive.

## Revendications

1. Entraînement pour meuble muni d'un moteur d'entraînement électrique (1) et d'un dispositif de freinage (10),
- dans lequel le moteur d'entraînement (1) comporte un arbre de sortie (5) qui dépasse d'un carter de moteur (2)
- dans lequel le dispositif de freinage (10) comporte au moins un élément de frein (17) et un accumulateur d'énergie, lequel accumulateur d'énergie agit de façon permanente sur une surface de frottement de l'au moins un élément de frein (17) en exerçant un effort de freinage, l'accumulateur d'énergie et l'élément de frein (17) étant conformés d'une pièce,
**caractérisé en ce que**
- les coefficients de frottement par adhérence et de par glissement diffèrent d'un facteur 1,3 entre la surface de frottement de l'élément de frein (17) et l'arbre de sortie (5), et
- **en ce qu'**un moteur-frein électrique est prévu pour le moteur d'entraînement (1).

2. Entraînement pour meuble (20) selon la revendication 1, dans lequel l'accumulateur de frein et l'élément de frein (17) sont fabriqués dans le même matériau.

3. Entraînement pour meuble (20) selon la revendication 1 ou 2, comportant un corps de base annulaire (11) qui est fermé sur sa circonférence au moins dans sa région extérieure.

4. Entraînement pour meuble (20) selon la revendication 2, comportant une ouverture centrale (14), avec des surfaces inférieures qui forment les surfaces de frottement du dispositif de freinage (10).

5. Entraînement pour meuble (20) selon la revendication 3 ou 4, comportant au moins une découpe (15) qui est formée dans le corps de base (11) à partir de l'ouverture centrale (14).

6. Entraînement pour meuble (20) selon l'une des revendications 3 à 5, comportant au moins une autre découpe (12) qui est formée dans le corps de base (11) à partir de la périphérie extérieure du corps de base (11).

7. Entraînement pour meuble (20) selon la revendication 5 ou 6, dans lequel le corps de base (11) comporte plusieurs découpes (12) et/ou plusieurs autres découpes (15) disposées en étoile.

8. Entraînement pour meuble (20) selon la revendication 7, dans lequel le corps de base (11) comporte plusieurs découpes (12) et plusieurs autres découpes (15), les découpes (12) et les autres découpes (15) étant alternées sur la circonférence.

9. Entraînement pour meuble (20) selon l'une des revendications 3 à 8, dans lequel le corps de base (11) est fabriqué en forme de disque à partir d'un matériau plein.

10. Entraînement pour meuble (20) selon la revendication 9, dans lequel le corps de base (11) se compose de zinc, de bronze ou de PEEK.

11. Entraînement pour meuble (20) selon la revendication 8 ou 9, dans lequel la surface du corps de base (11) forme la surface de frottement de l'au moins un élément de frein (17).

12. Entraînement pour meuble (20) selon la revendication 8 ou 9, dans lequel au moins un segment annulaire supplémentaire est placé sur le corps de base (11) et orienté vers l'ouverture centrale (14), une surface de l'au moins un segment annulaire formant la surface de frottement de l'élément de frein (17).

13. Entraînement pour meuble (20) selon l'une des revendications 1 à 12, dans lequel le dispositif de freinage (10) est disposé dans ou sur une fixation du moteur.

14. Entraînement pour meuble (20) selon l'une des revendications 1 à 12, dans lequel le dispositif de freinage (10) est intégré dans le moteur d'entraînement électrique (1).

15. Entraînement pour meuble (20) selon la revendication 14, dans lequel le dispositif de freinage (10) est conformé comme un palier de glissement pour l'arbre d'entraînement (5) du moteur d'entraînement électrique (1).

16. Entraînement pour meuble (20) selon l'une des revendications 1 à 15, dans lequel le moteur-frein électrique est produit par un court-circuit sur les branchements du moteur d'entraînement (1) appliqué par une installation de commande de l'entraînement pour meuble (20).

17. Entraînement pour meuble (20) selon l'une des revendications 1 à 16, réalisé comme un entraînement à broche, en particulier comme un actionneur linéaire à broche.
